## Europäisches Patentamt

## European Patent Office

## Office européen des brevets

(11) Publication number: **0 076 685**

**B1**

# EUROPEAN PATENT SPECIFICATION

(45) Date of publication of patent specification: **21.08.85**

(51) Int. Cl.⁴: **A 23 J 3/00**

(21) Application number: **82305272.5**

(22) Date of filing: **04.10.82**

(54) A process for improving the quality of whey protein.

(30) Priority: **02.10.81 JP 157268/81**
**05.02.82 JP 17790/82**

(43) Date of publication of application:
**13.04.83 Bulletin 83/15**

(45) Publication of the grant of the patent:
**21.08.85 Bulletin 85/34**

(84) Designated Contracting States:
**BE DE GB NL**

(56) References cited:
**EP-A-0 029 370**
**DE-A-2 202 267**

(73) Proprietor: **KYOWA HAKKO KOGYO CO., LTD**
**Ohtemachi Bldg. Ohtemachi 1-chome Chiyoda-ku**
**Tokyo (JP)**

(72) Inventor: **Furukawa, Tadayasu**
**2612-165, Kanai-machi**
**Machida-shi Tokyo-to (JP)**
Inventor: **Taguchi, Tokuichi**
**3-6-6, Asahi-machi**
**Machida-shi Tokyo-to (JP)**
Inventor: **Yamamoto, Kazuhiro**
**3-6-6, Asahi-machi**
**Machida-shi Tokyo-to (JP)**
Inventor: **Ohta, Shigenori**
**3-6-17, Iwato-kita**
**Komae-shi Tokyo-to (JP)**

(74) Representative: **Watkins, Arnold Jack et al**
**European Patent Attorney Frank B. Dehn & Co.**
**Imperial House 15-19 Kingsway**
**London WC2B 6UZ (GB)**

## Description

The present invention relates to a process for the preparation of an improved whey protein capable of forming gels having advantageous properties such as, for example, high strength and fine texture.

It is known that proteins may be recovered from milk whey such as, for example, from cheese whey and casein whey on an industrial scale by various methods such as, for example, ultrafiltration and gel filtration so as to obtain various products containing whey protein in high concentration.

Although nowadays various whey protein preparates having high nutritional value may be marketed for processing foodstuffs, such whey proteins commonly suffer the disadvantage that their gel-forming ability (that is, the ability to form gels by heating) is considerably less than that of egg albumen and moreover, the thus-obtained gels are very brittle. There is therefore a need for whey protein having improved gel-forming ability to increase the commercial and technical importance of whey protein as a raw material in the processing of foodstuffs.

It is known to lower the gelling temperature of whey protein derived from milk. Such a process comprises maintaining an aqueous solution of the whole whey protein having a concentration of proteins of from 0.5 to 10% weight/volume at an elevated temperature of at least 70°C to effect an increase in the sulfhydryl groups available for reaction, the period of time over which the proteins are maintained at the elevated temperature and the pH of the solution both being selected such that precipitation, gelling and coagulation of the proteins whilst at the elevated temperature is prevented. The resultant solution is then cooled (see Japanese Patent Application as laid open to public inspection as Kokai Koho Sho-56-26159=26159/81.

A process for preparing a protein containing product is also known, which is characterized by a reduction in the temperature required for the onset of thermogelation of a solution having a pH above the isoelectric point and increased stability of the protein in solution having a pH below the isoelectric point. The process comprises cooling an ungelled alkaline heated solution containing from about 0.5 to 20% by weight protein at a rate sufficient to prevent gelation of the solution, said protein being capable of thermogelling by formation of disulfide linkage(s) under the influence of heat, which protein is substantially soluble in said alkaline solution, said heated alkaline solution having a pH within the range of from 7.5 to 10 and a temperature within the range of from 50°C up to the gellation temperature of the solution. The protein is derived from dairy, vegetable, meat and blood sources (see Japanese Patent Application as laid open to public inspection as Kokai Koho Sho-56-99752=99752/81).

The gels prepared by using such known whey proteins, however, suffer the disadvantages of brittleness and insufficient bending strength.

The present invention is based on the discovery that an improved whey protein capable of forming strong gels and having a good texture may be obtained by maintaining a whey protein solution within a given pH and temperature range, a mixture of certain acids thereafter being added to adjust the pH of the solution to a pH within a lower pH range.

Thus according to one feature of the present invention there is provided a process for improving the quality of whey protein, characterized in that a whey protein solution containing 3—15% w/w whey protein and having a reduced calcium content is maintained at a pH of from 8.5 to 11.5 and at a temperature of from 35 to 50°C, a mixture of at least one acid selected from the group A consisting of citric acid, phosphoric acid, polyphosphoric acids, phytic acid and oxalic acid, and at least one acid selected from the group B consisting of hydrochloric acid, sulfuric acid, lactic acid, tartaric acid, succinic acid and maleic acid thereafter being added to the solution whereby to adjust the pH thereof to 6—8.

Whey protein solutions which may be used for the purpose of the present invention are exemplified by whey protein concentrates obtained from milk whey such as cheese whey, casein whey and the like and which may be prepared for example by ultrafiltration or gel filtration. It is also possible to use whey protein solutions prepared by rehydrating the whey protein powders obtained by spray-drying such concentrates. Suitable whey protein solutions contain 3—15% w/w whey protein. The calcium content (relative to total solids) should be reduced compared to normal whey. The ratio of the protein content to the total solids in the whey protein solution may not be excessively high and thus may preferably be more than 60%. A preferred whey protein solution for use as a starting material is a concentrate obtained by adding specific acid salts to whey in a process for preparing a whey protein concentrate by ultrafiltration. The improved whey protein obtained by using the resulting concentrate as a starting material in the process of the present invention has good gel-forming ability.

A whey protein concentrate may, for example, be prepared by ultrafiltration as described below:—

At least one salt selected from the acid salts of citric acid, phosphoric acid, polyphosphoric acids, sulfuric acid and phytic acid is conveniently added to a whey in a physiologically acceptable proportion, preferably in an amount of from 0.05 to 3.5 %w/v. The mixture may then be stirred to dissolve the acid salt prior to ultrafiltration. The acid salt used may be added to the raw material in the form of a solid salt or a salt solution.

Although it is possible to use various other organic acid salts having a chelating activity such as, for example, the acid salt of oxalic acid, succinic acid, maleic acid, fumaric acid, ethylenediaminetetraacetic acid and the like, the acid salts specified above are particularly advantageous in view of the amount of acid salt used, the effect obtained and the ease with which foodstuffs may be prepared.

**0 076 685**

With regard to ultrafiltration, it is advantageous to use an ultrafiltration membrane capable of fractionating substances having the largest possible molecular weight so far as it is possible to retain the protein content by ultrafiltration. Thus, it is preferred to use an ultrafiltration membrane capable of fractionating substances having a molecular weight of more than 5,000, preferably more than 10,000. If desired, it is also possible to add water to the solution to be filtered during the ultrafiltration.

The solution thus-obtained may be dried, for example, by spray-drying to give a whey protein concentrate powder containing 0.05—0.45 %w/w calcium which is considerably smaller than the corresponding amount of calcium present in conventional whey protein concentrates prepared by ultrafiltration alone.

When the whey protein concentrate thus-obtained is dissolved in water at a concentration of 8% and heated at a temperature of more than 70°C, it is possible to obtain a strong gel which is resistant to bending. The whey protein concentrate thus-obtained is of interest as a foodstuff.

In order to control the pH and temperature of the whey protein solution, the solution may be adjusted to a pH of 8.5—11.5 using an alkali and then heated to a temperature of 35—50°C, although it is possible if desired to first adjust the temperature, followed by adjustment of the pH of the solution. It is also possible to adjust the pH and temperature simultaneously. The pH may be adjusted, for example, with sodium hydroxide.

After adjusting the pH and temperature, the solution is maintained within the temperature range for example for 2—240 minutes which may vary, with differing conditions such as, for example, the pH and temperature (preferably for 10—90 minutes).

The solution is neutralized, i.e. to pH in the range of 6—8, by addition to the solution of a mixture of at least one acid selected from citric acid, phosphoric acid, polyphosphoric acids, phytic acid and oxalic acid (referred to herein as group A) with at least one acid selected from hydrochloric acid, sulfuric acid, acetic acid, tartaric acid, succinic acid and maleic acid (referred to herein as group B). Preferred examples of polyphosphoric acids are pyrophosphoric acid, tripolyphosphoric acid and hexametaphosphoric acid. Any convenient mixing ratio of the group A and B acids may be used and this ratio may vary, with differing conditions such as, for example, the concentrations of the acids used. The mixing ratio of group A acid(s) to group B acid(s) is however preferably 1:0.5 to 1:20. It is possible to increase the bending strength of the gel formed by the use of at least one acid of group A and the breaking strength of the gel may be increased by the use of at least one acid of group B.

Citric acid is a preferred group A acid and hydrochloric acid is a preferred group B acid, by virtue of the improved properties of the whey proteins obtained.

After adjusting the pH of the solution to 6—8 by adding the mixture of acids, the whey protein solution may be used for processing foodstuffs, with or without dilution or concentration. It is also possible to dry the solution to obtain whey protein powders which may also be used for processing foodstuffs. Any convenient drying method may be used, preferably spray-drying.

The improved whey protein of the present invention thus obtained may be dissolved in water, for example, at a concentration of more than 8 %w/w, and then heated at a temperature of more than 70°C to form a strong gel having excellent texture. The strength of the gel is in general equal or superior to the strength of egg ablumen. Its gelation temperature is lower than the corresponding temperature of conventional whey proteins. The improved whey protein exhibits good solubility in water and salt solutions (e.g. sodium chloride solution) like conventional whey proteins.

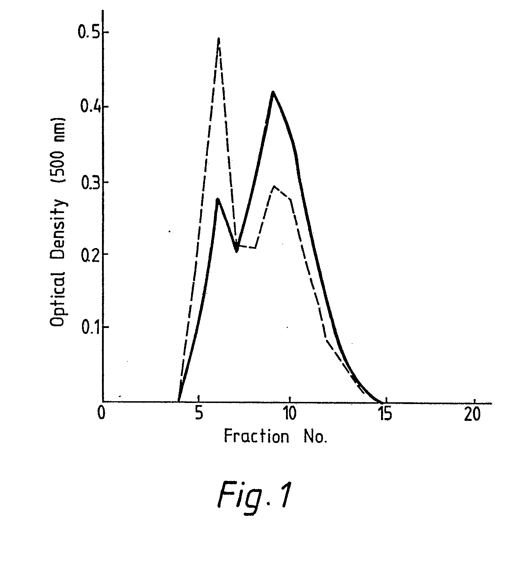

Fig. 1 shows a gel filtration pattern of an improved whey protein solution obtained according to the present invention (indicated by - - - -) and the corresponding pattern of a conventional whey protein solution, both obtained by using columns packed with Sephadex G-100.

This pattern is obtained by diluting an improved whey protein solution obtained according to the present invention to give a protein concentration of 0.75% and subjecting this solution to gel filtration using a column (1.5×30 cm) packed with Sephadex G-100 (commercial product of Pharmacia Fine Chemicals AB., Sweden) under the following conditions:—

| | |
|---|---|
| Eluting solution | Phosphate buffer solution (pH 7.0) |
| Simple volume | 0.5 ml |
| Volume of each fraction | 3 ml |
| Method of determination | Lowry method (500 nm) |

A reference pattern obtained by treating a whey protein (unimproved) under the same conditions is also indicated in Fig. 1. From the figure, it may be seen that the improved whey protein contains more fractions having higher molecular weights (Fraction Nos. 5—7) than the unimproved whey protein and thus the ratio of the associated products having such higher molecular weights is higher than that of the untreated whey protein. It has been found that the improved whey proteins obtained by the process of the present invention exhibit in general a ratio of associated product formation of 35—75%, preferably 45—60%.

The following non-limiting Examples illutrate the present invention.

3

# 0 076 685

Example 1

1640 g of water are added to 360 g of a whey protein concentrate powder (total solids 96 %w/w, protein 75 %w/w, lactose 5.0 %w/w, total ashes 3.0 %w/w including calcium 0.5 %w/w) [prepared in Reference 1 described hereinafter] to prepare a solution containing 13.5 %w/w protein. The pH of the solution is adjusted to 10.7 with 2N sodium hydroxide. The solution is then heated to 48°C and maintained at this temperature for 15 minutes with gentle stirring. The solution is then divided into 10 equal parts, the pH of each part being adjusted to 6.8 by adding, one or more acids, the acids or mixture of acids used in each case being indicated by samples 1—10 in the following Table 1. The yield of the associated product contained in the improved whey proteins is 57% which is higher than the corresponding yield (23%) obtained by using the untreated whey protein.

The sulfhydryl (SH) group content in the improved whey proteins is determined by the method of Ellman [J. of Food Science, 39 49 (1974)] to obtain a value of $13.5 \times 10^{-6}$ mole/g protein, while the corresponding value of the untreated whey protein is $18.7 \times 10^{-6}$ mole/g protein. From these values, it is found that the association reaction effected by the process of the present invention results in a decrease in the number of SH groups.

Various solutions containing the improved whey proteins at a protein concentration of 9.4% are prepared. On each occasion, the solution is put in a casing having a diameter of 3 cm, heated at 90°C for 30 minutes and cooled. The breaking strength of the gel thus obtained is measured on each occasion using a Rheometer (commercial product of Fuji Rika K. K., Japan) to give the results shown in Table 1.

TABLE 1

| Nos. 2—4 & 6—10: | Improved whey proteins of the present invention |
| No. 11: | Conventional whey protein gel (control) |
| No. 12: | Egg albumen (control) |
| A: | Breaking strength (g) of gel |
| B: | Texture of gel (bending strength test) |

| No. | Acids used | A | B |
|---|---|---|---|
| | 3N citric acid/1N hydrochloric acid | | |
| 1 | 1:0 (control) | 183 | A |
| 2 | 1:3 | 260 | A |
| 3 | 1:9 | 298 | A |
| 4 | 1:15 | 256 | A |
| 5 | 0:1 (control) | 179 | D |
| 6 | 1N phosphoric acid/1N hydrochloric acid (1:3) | 270 | A |
| 7 | 1N pyrophosphoric acid/1N hydrochloric acid (1:1) | 255 | A |
| 8 | 5% phytic acid/1N hydrochloric acid (1:6) | 275 | A |
| 9 | 2N oxalic acid/1N hydrochloric acid (1:4) | 245 | A |
| 10 | 3N citric acid/1N phosphoric acid/1N hydrochloric acid (1:1:12) | 265 | A |
| 11 | Control (gel of untreated whey protein) | 45 | D |
| 12 | Control (egg albumen gel) | 245 | B |

In Table 1, the bending strength is determined according to the method by Okada, Yokozeki and Maki [Fish meal paste products, page 374 (1974) published by Kosei-sha Kosei-kaku, Japan] and the gel texture (bending strength) is expressed by the following classes A—D determined by folding a piece of gel plate having a diameter of 3 cm and a thickness of 2 mm into 2 or 4 as follows:

4

| | |
|---|---|
| A (very good) | No crack is formed by folding the piece into 4. |
| B (good) | By folding into 2, no crack is formed. |
| C (brittle) | By folding into 2, crack is formed to about one half of the diameter. |
| D (very brittle) | By folding into 2, crack is formed across the diameter. |

Table 1 indicates the following:—

Stronger gels are obtained by using mixed acids when compared with the use of a single acid.

The improved whey protein gels have a better texture than the gels obtained from untreated whey protein, and their gel strength is equal or superior to the strength of egg albumen.

By heating at 70°C, the improved whey proteins are sufficiently gelified, in contrast to a temperature of higher than 80°C needed for the gel formation of untreated whey protein.

Example 2

A whey protein solution as prepared in Reference 2 described hereinafter is used, the solution being divided into fractions which are each treated to improve the properties of the whey proteins under conditions shown in Table 2. The solutions are then adjusted to a pH of 7.2 by the addition of a mixture of acids prepared by adding citric acid to hydrochloric acid to give a final concentration of the mixture of 1.5N calculated as citric acid or 4.5N calculated as hydrochloric acid. The yield of the associated products obtained from each of the improved whey proteins is shown in Table 2. The solution of the improved whey protein is then spray-dried on each occasion to obtain a powder. The powder is dissolved in water to give a solution having a protein concentration of 9.4 %w/w, from which a gel is prepared in a similar manner to that described in Example 1. The breaking strength and texture of the gel are determined in a similar manner to that described in Example 1, as shown in Table 2. All of the powders thus-prepared are completely dissolved when dispersed in water or 3 %w/w sodium chloride solution at a concentration of 2 %w/w.

TABLE 2

A—Conditions for improving treatment
B—Yield of associated product (%)
C—Breaking strength (g) of gel
D—Texture (by bending test as shown in Table 1)**
E—Conventional whey protein (control)

| No. | A [pH* | Temp (°C) | Time (min.)] | B | C | D** |
|---|---|---|---|---|---|---|
| 1 | 10.7 | 38 | 60 | 60 | 260 | A |
| 2 | 10.1 | 47 | 30 | 58 | 265 | A |
| 3 | 9.5 | 47 | 60 | 49 | 210 | A |
| 4 | 10.7 | 30 | 120 | 33 | 145 | C |
| 5 | 8.0 | 47 | 120 | 30 | 120 | C |
| 6 | 10.0 | 55 | 30 | 63 | 110 | C |
| 7(E) | | | | 14 | 70 | D |

*Adjusted by using 10N sodium hydroxide solution.

From Table 2, it is apparent that the whey proteins (Nos. 1, 2 and 3) treated under the improved conditions taught by the present invention i.e. at a pH of 8.5—11.5 and at a temperature of from 35—50°C are far superior to the whey proteins treated under conditions which do not fall within the scope of the present invention [No. 4—the temperature; No. 5—the pH; and No. 6—the temperature] insofar as the mechanical strength and texture of the gel are concerned.

Example 3

A whey protein concentrate powder as prepared in Reference 1 described hereinafter is used, the powder being dissolved in water to give a protein concentration of 9.4 %w/w. the pH of the solution is adjusted to 10.2 with 10% sodium hydroxide solution and the solution is then heated at 45°C for 30 minutes, followed by division into 7 equal fractions. Each fraction is adjusted to a pH of 7.0 by adding the particular acids shown in Table 3 to the appropriate sample and then spray drying to obtain a powder. The powder is dissolved in water to give a protein concentration of 9.4 %w/w, from which a gel is prepared in a similar manner to that described in Example 1, the physical properties of which are indicated in the following Table 3.

TABLE 3

A—Acids used
B—Breaking strength (g) of gel*
C—Texture (by bending test)*

| No. | A | B | C |
|---|---|---|---|
| 1 | Citric acid/hydrochloric acid (1.5N:4.5N) | 245 | A |
| 2 | 1N citric acid | 180 | A |
| 3 | 1N hydrochloric acid | 175 | D |
| 4 | 1N acetic acid | 135 | C |
| 5 | 1N lactic acid | 163 | B |
| 6 | 1N tartaric acid | 144 | B |
| 7 | 1N succinic acid | 170 | B |

*Determined in a similar manner to that described in Example 1.

Table 3 indicates that by using a mixture of acids, the mechanical properties (gel strength and texture) are greatly improved when compared with the use of a single acid.

Example 4

A whey protein concentrate powder (No. 1 in Table 4) prepared as hereinafter described in Reference 3 is used, the powder being dissolved in water to give a protein concentration of 11.5 %w/w.

To this solution is added 2n sodium hydroxide to adjust the pH to 10.0. The solution is heated to 45°C and kept at this temperature for 30 minutes with agitation. A mixture of 3N citric acid and 1N hydrochloric acid (1:9 by volume) is then added to the solution to adjust the pH to 6.8. The solution is spray-dried to obtain powders, from which a gel is prepared in a similar manner to that described in Example 1. The breaking strength of this gel is 368 g, while the breaking strength of a control gel is 240 g, the control gel being prepared by treating the control sample (No. 7 in Table 4) described in Reference 3 in a similar manner to that described above.

Reference 1

A cheese whey (total solids 5.9 %w/v, protein 0.73 %w/v, lactose 4.3 %w/v, total ashes 0.50 %w/v including calcium 0.06 %w/v, pH 6.4) is subjected to ultrafiltration in a conventional manner, using a membrane for fractionating substances having a molecular weight of 20,000, whereby the cheese whey is concentrated to one-twentieth of its original volume. The residual solution is diluted three times (v/v) with purified water and the diluted solution is concentrated to one-third of its original volume by ultrafiltration. The concentrate is spray-dried to obtain a whey protein concentrate (total solids 96 %w/w, protein 75 %w/w, lactose 5.0 %w/w, total ashes 3.0 %w/w including calcium 0.5 %w/w).

Reference 2

A cheese whey (total solids 5.9 %w/v, protein 0.73 %w/v, total ashes 0.50 %w/v including calcium 0.06 %w/v, pH 6.4) is subjected to ultrafiltration in a conventional manner using a membrane for fractionating substances having a molecular weight of 10,000, whereby the cheese whey is concentrated to one-tenth of its original volume. The residual solution is diluted twice (v/v) with purified water and the diluted solution is concentrated to half of its original volume by ultrafiltration to obtain a whey protein solution (total solids 10.5 %w/w, protein 7.5 %w/w, total ashes 0.4 %w/w including calcium 0.06 %w/w).

6

Reference 3

A cheese whey (total solids 5.9 %w/v, protein 0.75 %w/v, lactose 4.3 %w/v, total ashes 0.50 %w/v including calcium 0.07 %w/v is divided into pieces (each 1000 litre). (1) sodium citrate, (2) disodium hydrogen phosphate, (3) sodium metaphosphate, (4) sodium phytate, (5) sodium sulfate or (6) a mixture of sodium citrate and sodium metaphosphate (1:1 by weight) (each 3 kg) is added to each whey sample and dissolved by effective mixing. The solution is subjected to conventional ultrafiltration using a membrane for fractionating substances having a molecular weight of 20,000, whereby the cheese whey is concentrated to one-twentieth of its original volume. The residual solution is diluted three times (v/v) with purified water, followed by further ultrafiltration to give 50 l of a whey protein concentrate. After adjusting the pH of 7.0 with sodium hydroxide, the solution is spray-dried to obtain a whey protein concentrate powder. The calcium and protein content present in each whey protein concentrate powder is respectively indicated in Table 4, from which it is apparent that the calcium content in the samples has decreased significantly over the control sample.

Subsequently, each whey protein concentrate sample is treated with water to obtain a solution containing 9.4 %w/w protein. The solution is put into a casing having a diameter of 3 cm, heated at 90°C for 30 minutes and cooled to 25°C.

The breaking strength of the gel thus-prepared is measured using a Rheometer (commercial product of Fuji Rika K. K., Japan) and indicated in Table 4.

TABLE 4

| No. | Acid salt used | Whey protein concentrate | | Gel |
| --- | --- | --- | --- | --- |
| | | Protein | Calcium | Breaking strength |
| 1 | Sodium citrate | 78% | 0.25% | 150g |
| 2 | Disodium hydrogen phosphate | 78 | 0.40 | 60 |
| 3 | Sodium hexametaphosphate | 78 | 0.30 | 115 |
| 4 | Sodium phytate | 78 | 0.25 | 105 |
| 5 | Sodium sulfate | 78 | 0.38 | 65 |
| 6 | Sodium citrate/sodium hexametaphosphate (1:1) | 78 | 0.30 | 130 |
| 7 | Control (no additive) | 78 | 0.53 | 30 |

Reference 4

A cheese whey (total solids 5.9 %w/v, protein 0.75 %w/v, lactose 4.3 %w/v, total ashes 0.50 %w/v including calcium 0.07 %w/v) is subjected to ultrafiltration using a membrane capable of fractionating substances having a molecular weight of more than 20,000 to concentrate the whey to one-tenth of its original volume. The whey concentrated solution thus-obtained is divided into fractions (each 100 litre). Each fraction or sample solution is treated with either (1) sodium citrate, (2) disodium hydrogen phosphate (3) sodium tripolyphosphate, (4) sodium phytate, (5) sodium sulfate or (6) a mixture of sodium citrate and sodium tripolyphosphate (2:1 by weight) (each 0.5 kg). The mixture is further treated with purified water (300 litre) and well stirred to form a solution which is then subjected to ultrafiltration to obtain a whey protein concentrate solution (50 litre). After adjusting the pH to 6.7, the whey protein concentrate solution is spray-dried to obtain a whey protein concentrate powder having the protein and calcium contents indicated in Table 5.

# 0 076 685

TABLE 5

| No. | Acid salt used | Whey protein concentrate | | Gel |
| | | Protein | Calcium | Breaking strength |
| --- | --- | --- | --- | --- |
| 1 | Sodium citrate | 83% | 0.21% | 145g |
| 2 | Disodium hydrogen phosphate | 83 | 0.45 | 55 |
| 3 | Sodium tripolyphosphate | 83 | 0.35 | 120 |
| 4 | Sodium phytate | 83 | 0.30 | 100 |
| 5 | Sodium sulfate | 83 | 0.45 | 60 |
| 6 | Sodium citrate/sodium tripolyphosphate (2:1) | 83 | 0.25 | 140 |
| 7 | Control (no additive) | 83 | 0.51 | 45 |

Reference 5

A whey protein concentrate (total solids 7.0 %w/v, protein 4.9 %w/v, total ashes 0.32 %w/v and having a ratio of calcium/protein of $5.3 \times 10^{-3}$) is treated and tested as follows:— The whey protein concentrate is divided into samples (1000 litre) to each of which samples is added sodium citrate in an amount of: (1) 0 kg, (2) 0.7 kg, (3) 1.4 kg, (4) 2.1 kg, (5) 3.5 kg or (6) 7.0 kg. Each mixture is stirred separately to form a solution which is subjected to ultrafiltration using a membrane for fractionating substances having a concentrate solution (500 litre) having a protein content of 9.8 %w/w. Table 6 indicates that the ratio of calcium to protein decreases in accordance with the increase in the amount of sodium citrate used. After adjusting the pH of the whey protein concentrate solution to 6.8, in a similar manner to that described in Reference 3, each solution is put into a casing to prepare a gel having a breaking strength as indicated in Table 6, from which it is apparent that a ratio of calcium to protein within a range of from $4.3 \times 10^{-3}$ to $1.5 \times 10^{-3}$ gives gels which are siginficantly stronger than the control gel (without addition of sodium citrate).

TABLE 6

| No. | Amount of sodium citrate added | Ratio of calcium to protein | Breaking strength of gel |
| --- | --- | --- | --- |
| 1 | 0 kg | $5.3 \times 10^{-3}$ | 35g |
| 2 | 0.7 | $4.3 \times 10^{-3}$ | 75 |
| 3 | 1.4 | $3.3 \times 10^{-3}$ | 160 |
| 4 | 2.1 | $2.9 \times 10^{-3}$ | 145 |
| 5 | 3.5 | $1.5 \times 10^{-3}$ | 85 |
| 6 | 7.0 | $0.5 \times 10^{-3}$ | 45 |

## Claims

1. A process for obtaining whey protein with improved gel-forming ability and texture characterized in that a whey protein solution containing 3—15 %w/w whey protein and having a reduced calcium content is maintained at a pH of from 8.5 to 11.5 and at a temperature of from 35 to 50°C, a mixture of at least one acid selected from the group A consisting of citric acid, phosphoric acid, polyphosphoric acids, phytic acid and oxalic acid, and at least one acid selected from the group B consisting of hydrochloric acid, sulfuric acid, lactic acid, tartaric acid, succinic acid and maleic acid thereafter being added to the solution whereby to adjust the pH thereof to 6—8, and obtaining said whey protein with improved gel-forming ability and texture.

2. A process as claimed in claim 1, wherein the whey protein solution is a concentrate obtained by adding at least one salt selected from the acid salts of citric acid, phosphoric acid, polyphosphoric acids,

8

## 0 076 685

phytic acid and sulfuric acid to a whey, in a physiologically acceptable proportion and subjecting the resultimg mixture to ultrafiltration whereby to obtain said concentrate.

3. A process as claimed in claim 2 wherein 0.05 to 3.5% by weight of the salt is used based on the volume of whey.

4. A process as claimed in claim 2 or claim 3 wherein the ultrafiltration is effected using an ultrafiltration membrane capable of fractionating substances having a molecular weight of more than 5,000.

5. A process as claimed in any one of the preceding claims wherein the concentration of calcium present in the whey protein is from 0.05 to 0.45% by weight.

6. A process as claimed in any one of the preceding claims wherein the whey protein solution is maintained at the temperature defined in claim 1 for 2 to 240 minutes.

7. A process as claimed in claim 6 wherein the said temperature is maintained for 10 to 90 minutes.

8. A process as claimed in any one of the preceding claims wherein the ratio of the acid(s) of group A to the acid(s) of group B is 1:0.5 to 1:20.

9. A process as claimed in any one of the preceding claims wherein citric acid is used as the group A acid.

10. A process as claimed in any one of the preceding claims wherein hydrochloric acid is used as the group B acid.

**Patentansprüche**

1. Verfahren zur Gewinnung von Molkeprotein mit verbesserter Fähigkeit zur Gel-Bildung und verbesserter Textur, dadurch gekennzeichnet, daß man eine Molkeproteinlösung, die 3—15% Gew./Gew. Molkeprotein enthält und einen reduzierten Calciumgehalt aufweist, bei einem pH von 8,5 bis 11,5 und bei einer Temperatur von 35 bis 50°C hält, danach eine Mischung aus mindestens einer Säure, die ausgewählt ist aus der Gruppe A, welche aus Citronensäure, Phosphorsäure, Polyphosphorsäuren, Phytinsäure und Oxalsäure besteht, und aus mindestens einer Säure, die ausgewählt ist aus der Gruppe B, welche aus Chlorwasserstoffsäure, Schwefelsäure, Milchsaure, Weinsäure, Bernsteinsäure und Maleinsäure besteht, zu der Lösung gibt, wodurch der pH auf 6 bis 8 eingestellt wird, und das genannte Molkeprotein mit verbesserter Fähigkeit zur Gelbildung und verbesserter Textur gewinnt.

2. Verfahren nach Anspruch 1, worin die Molkeproteinlösung ein Konzentrat ist, das man durch Zugabe mindestens eines, Salzes, ausgewählt unter den Säuresalzen von Citronensäure, Phosphorsäure, Polyphosphorsäuren, Phytinsäure und Schwefelsäure, in einem physiologisch verträglichen Anteil zur Molke gibt und die erhaltene Mischung einer Ultrafiltration unterwirft, wobei man das genannte Konzentrat gewinnt.

3. Verfahren nach Anspruch 2, worin man 0,05 bis 3,5 Gew.-% des Salzes einsetzt, bezogen auf das Molkevolumen.

4. Verfahren nach Anspruch 2 oder Anspruch 3, worin man die Ultrafiltration unter Verwendung einer Ultrafiltrationsmembran durchführt, die in der Lage ist, Substanzen mit einem Molekulargewicht von mehr als 5 000 zu fraktionieren.

5. Verfahren nach einem der vorhergehenden Ansprüche, worin die im Molkeprotein vorhandene Calciumkonzentration 0,05 bis 0,45 Gew.-% beträgt.

6. Verfahren nach einem der vorhergehenden Ansprüche, worin man die Molkeproteinlösung für 2 bis 240 Minuten bei der in Anspruch 1 definierten Temperatur hält.

7. Verfahren nach Anspruch 6, worin man die genannte Temperatur 10 bis. 90 Minuten lang aufrecht erhält.

8. Verfahren nach einem der vorhergehenden Ansprüche, worin das Verhältnis von Säure(n) der Gruppe A zu Säure(n) der Gruppe B 1:0,5 bis 1:20 beträgt.

9. Verfahren nach einem der vorhergehenden Ansprüche, worin man Citronensäure als Säure der Gruppe A einesetzt.

10. Verfahren nach einem der vorhergehenden Ansprüche, worin man Chlorwasserstoffsäure also Säure der Gruppe B einsetzt.

**Revendications**

1. Procédé d'obtention de protéine de petitlait dont l'aptitude à la formation d'un gel et la texture sont améliorées, caractérisé en ce qu'une solution de protéine de petit-lait contenant 3 à 15% en poids/poids de protéine de petit-lait et à teneur en calcium réduite est maintenue à un pH de 8,5 à 11,5 et à une température de 35 à 50°C, un mélange d'au moins un acide choisi dans le groupe A comprenant l'acide citrique, l'acide phosphorique, les acides polyphosphoriques, l'acide phytique et l'acide oxalique et d'au moins un acide choisi dans le groupe B comprenant l'acide chlorhydrique, l'acide sulfurique, l'acide lactique, l'acide tartrique, l'acide succinique et l'acide maléique étant ensuite ajouté à la solution de manière à adjuster son pH à 6—8, et on obtient ladite protéine de petit-lait dont l'aptitude à la formation d'un gel et la texture sont améliorées.

2. Procédé suivant la revendication 1, dans lequel la solution de protéine de petit-lait est un concentré

9

**0 076 685**

obtenu par addition d'au moins un sel choisi entre les sels d'acides de l'acide citrique, de l'acide phosphorique, des acides polyphosphoriques, de l'acide phytique et de l'acide sulfurique à du petit-lait en proportion physiologiquement acceptable, et exposition du mélange résultant à une ultrafiltration de manière obtenir ledit concentré.

3. Procédé suivant la revendication 2, dans lequel on utilise 0,05 à 3,5% en poids du sel sur la base du volume de petit-lait.

4. Procédé suivant la revendication 2 ou la revendication 3, dans lequel l'ultrafiltration est effectuée en utilisant une membrane d'ultrafiltration capable de fractionner des substances ayant un poids moléculaire supérieur à 5000.

5. Procédé suivant l'une quelconque des revendications précédentes, dans lequel la concentration en calcium présente dans la protéine de petit-lait va de 0,05 à 0,45% en poids.

6. Procédé suivant l'une quelconque des revendications précédents, dans lequel la solution de protéine de petit-lait est maintenue à la température définie dans la revendication 1 pendant 2 à 240 minutes.

7. Procédé suivant la revendication 6, dans lequel ladite température est maintenue pendant 10 à 90 minutes.

8. Procédé suivant l'une quelconque des revendications précédentes, dans lequel le rapport de l'acide ou des acides du groupe A à l'acide ou aux acides du groupe B va de 1:0,5 à 1:20.

9. Procédé suivant l'une quelconque des revendications précédentes, dans lequel l'acide citrique est utilisé comme acide du groupe A.

10. Procédé suivant l'une quelconque des revendications précédentes, dans lequel l'acide chlorhydrique est utilisé comme acide du groupe B.

*Fig. 1*